# EUROPÄISCHE PATENTANMELDUNG

(11) **EP 3 628 711 A1**
(43) Veröffentlichungstag der Anmeldung: **01.04.2020**
(21) Anmeldenummer: 18197309.0
(22) Anmeldetag: 27.09.2018
(51) Int. Cl.: C09D 175/04, C08G 18/10

(54) **DISPERSIONSKLEBSTOFFE**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft die Verwendung wässriger Dispersionsklebstoffe auf Basis einer Mischung wässriger Polyurethan- bzw. Polyurethan-Harnstoffdispersionen für die Verklebung von Schaumsubstraten nach dem Sprühkoagulationsverfahren.

## Beschreibung

Die Erfindung betrifft die Verwendung wässriger Dispersionsklebstoffe auf Basis einer Mischung wässriger Polyurethan- bzw. Polyurethan-Harnstoffdispersionen für die Verklebung von Schaumsubstraten nach dem Sprühkoagulationsverfahren.

Bei der Verklebung von Schaumsubstraten mit anderen Substraten, beispielsweise bei den Kombinationen Schaum-Schaum, Schaum-Holz und Schaum-Kunststoff, werden überwiegend Polychloropren-Dispersionsklebstoffe nach dem Sprühkoagulationsverfahren eingesetzt. Bei diesem Verfahren werden der Klebstoff sowie ein Koagulationsmittel separat in eine Sprühpistole gefördert, im Sprühstrahl vermischt und koaguliert. Da die Vermischung erst im Sprühstrahl stattfindet, ist keine Topfzeit zu beachten. Zudem verbleibt der koagulierte Klebstoff an der zu verklebenden Substratoberfläche und diffundiert nicht oder nur zu einem geringen Teil in die Porenstruktur der Schaumsubstrate. Häufig werden hohe Anfangsfestigkeiten, ausreichend lange offene Zeiten und gute Wärmefestigkeiten erzielt.

Wichtige Anwendungsgebiete sind die Herstellung von Matratzen und Sitzmöbeln. Insbesondere aus den skandinavischen Ländern kommt die Forderung nach Chlor-freien Alternativen für die Polychloropren-Dispersionsklebstoffe, um beispielsweise die Anforderungen des Nordic Ecolabels (Typ-I-Umweltzeichen nach ISO 14024) erfüllen zu können. Zusätzlich sollen sie sich durch hohe Anfangsfestigkeiten und eine ausreichend lange offene Zeit auszeichnen.

Klebstoffe auf Basis von wässrigen Polyurethan-Dispersionen haben sich weltweit in anspruchsvollen industriellen Anwendungen etabliert, zum Beispiel bei der Schuhfertigung, der Verklebung von Teilen für die KFZ-Innenausstattung, der Folienlaminierung oder der Verklebung von textilen Substraten.

Bei der Verwendung solcher Dispersionen zum Kleben von Substraten wird häufig nach dem Thermoaktivierverfahren gearbeitet. Hierbei wird die Dispersion auf das Substrat aufgebracht, und nach vollständiger Verdunstung des Wassers wird die Klebstoffschicht durch Erwärmen, z.B. mit einem Infrarotstrahler, aktiviert und in einen klebfähigen Zustand überführt. Die Temperatur, bei der der Klebstofffilm klebrig wird, bezeichnet man als Aktiviertemperatur.

Bei der Verwendung von Polyurethan- bzw. Polyurethan-Polyharnstoff-Dispersionen kann aber auch nach dem Verfahren der Nassverklebung gearbeitet werden, d.h. die Durchführung der Verklebung erfolgt unmittelbar nach dem Klebstoffauftrag. Bis zum Abbinden des Klebstoffes ist eine mechanische Fixierung der zu verbindenden Teile erforderlich. Dieses Verfahren wird häufig zur Verklebung von Holz oder textilen Substraten verwendet.

Sowohl das Thermoaktivierverfahren als auch das Verfahren der Nassverklebung sind für die Verklebung von Schaumsubstraten wenig geeignet. Insbesondere die langsame Verdampfung des Wassers erfordert lange Wartezeiten zwischen Klebstoffauftrag und Klebevorgang oder entsprechende Trockenanlagen. Zudem kann ein nicht unerheblicher Teil des Klebstoffs vor oder während der Trocknung in die Poren der Schaumsubstrate eindiffundieren und steht dann nicht mehr für die eigentliche Klebung zur Verfügung.

Die im Markt etablierten Klebstoffe auf Basis von wässrigen Polyurethan-Dispersionen eignen sich in der Regel nicht für die Anwendung des Sprühkoagulationsverfahrens, da sie entweder nicht ausreichend schnell koagulieren, keine ausreichenden Anfangsfestigkeiten haben oder infolge der Kristallinität der Polymere sehr harte Klebnähte ausbilden, die insbesondere bei der Matratzenherstellung nicht akzeptabel sind. Auch beträgt die offene Zeit, d.h. die Zeitspanne zwischen Auftragen des Klebstoffs bis zum Zusammenfügen der Fügeteile, in der noch eine ausreichend gute Klebeverbindung erhalten wird, in der Regel nur eine Minute. Für viele Klebeprozesse wird aber mindestens die doppelte Zeitspanne benötigt.

In der WO 2013/053786 A1 werden wässrige Polyurethandispersionen beschrieben, deren Polymer eine Schmelztemperatur im Bereich von 30 °C bis 50 °C, bestimmt durch dynamische Differenz-Thermoanalyse gemäß DIN 65467 bei einer Aufheizrate von 20 K/min, aufweist, wobei das Polymer aus zwei unterschiedlich kristallisierenden Polyesterpolyolen in vorgegebenen Mengenverhältnissen erhältlich ist. Diese Polyurethandispersionen eignen sich in erster Linie als Kaltkontaktklebstoffe, sind aber auch mittels Sprühkoagulationsverfahren einsetzbar. Allerdings sind die dabei erzielbaren Anfangsfestigkeiten für die meisten Schaumverklebungsanwendungen unzureichend.

Mit Luphen® D DS 3548 der BASF AG (Ludwigshafen, Deutschland) wird eine Epoxidharzmodifizierte Polyurethandispersion angeboten, die unter anderem auch für das Sprühkoagulationsverfahren geeignet sein soll. Basis des dabei verwendeten Epoxidharzes ist Bisphenol-A-diglycidylether. Da Bisphenol A und daraus hergestellte Folgeprodukte bezüglich einer möglichen endokrinen Wirkung insbesondere von Endverbrauchern äußerst kritisch gesehen und deshalb in der Regel abgelehnt werden, verlangt der Markt nach Klebstoffen und sonstigen Produkten, die frei von Bisphenol A sind.

Die WO 2014/182170 A1 beschreibt die Durchführung des Sprühkoagulationsverfahrens mittels eines speziellen Airless-Spray-Verfahrens. Dazu werden sowohl Mischungen aus Polychloroprendispersionen und Tackifierdispersionen als auch aus Polyurethandispersionen und Tackifierdispersionen eingesetzt. Diese werden in dieser Schrift jedoch nicht weiter spezifiziert. Als Anwendungsgebiete werden Schaumverklebungen im Bereich Matratzen- und Möbelfertigung genannt. Dieser Stand der Technik offenbart allerdings weder die Art der verwendeten Polyure-thandispersionen noch mit welchen Maßnahmen man eine hohe Anfangsfestigkeit und eine ausreichend lange offene Zeit sicherstellen kann.

Die Aufgabe der vorliegenden Erfindung bestand somit in der Bereitstellung einer chlor- und Bisphenol-A-freien Alternative für Polychloropren-Dispersionsklebstoffe für die Verklebung von Schaumsubstraten nach dem Sprühkoagulationsverfahren, die die Nachteile des Standes der Technik nicht aufweisen und die sich durch hohe Anfangsfestigkeiten und eine ausreichend lange offene Zeit von mindestens 2 Minuten auszeichnen.

Aus der EP 2 090 603 A2 sind wässrige Dispersionen bekannt, enthaltend eine Mischung aus
A) einer wässrigen Polyurethan- bzw. Polyurethan-Harnstoff-Dispersion enthaltend,
   I. ein Polymer A) aufgebaut aus
      I(i). mindestens einem difunktionellen aliphatischen Polyesterpolyol mit einem Molekulargewicht von 400 bis 5000 g/mol,
      I(ii). mindestens einer Mischung aus Hexamethylendiisocyanat (HDI) und 1-Isocyanato-3,3,5-trimethyl-5-isocyanatomethyl-cyclohexan (IPDI) und
      I(iii). mindestens einem Gemisch aus zwei oder mehreren aminischen Kettenverlängeren, wobei zumindest eine Verbindung eine ionische Gruppe trägt,
      und das Polymer A) nach der Trocknung teilkristallin oder kristallin ist mit einem Glasübergang bei einer Glastemperatur Tg zwischen -65 °C und -40 °C,
B) einer von A) verschiedenen wässrigen Polyurethan- bzw. Polyurethan-Harnstoff-Dispersion enthaltend,
   II. ein Polymer B) aufgebaut aus
      II(i). mindestens einem difunktionellen aromatischen Polyesterpolyol mit einem Molekulargewicht von 400 bis 5000 g/mol,
      II(ii). mindestens einer difunktionellen Polyolkomponente mit einem Molekulargewicht von 62 bis 399,
      II(iii). mindestens einem aliphatischen Diisocyanat und
      II(iv). mindestens einem aminischen Kettenverlängerer mit einer ionischen Gruppe,
   wobei das Polymer B) nach der Trocknung amorph ist mit einem Glasübergang bei einer Glastemperatur Tg zwischen -15 °C und +10 °.

Gemäß EP 2 090 603 A2 eignen sich die beschriebenen Mischungen wässriger Polyurethan- bzw. Polyurethan-Polyharnstoff-Dispersionen als Klebstoffe sowohl nach dem Thermoaktivierverfahren als auch nach dem Verfahren der Nassverklebung und zeigen Klebfestigkeiten, die besser sind als die Einzelkomponenten.

Überraschend wurde nun gefunden, dass die in EP 2 090 603 A2 beschriebenen Mischungen wässriger Polyurethan- bzw. Polyurethan-Polyharnstoff-Dispersionen sich auch hervorragend für die Verklebung von Schaumsubstraten nach dem Sprühkoagulationsverfahren eignen, sofern man definierte Mengenverhältnisse einhält:

Gegenstand der vorliegenden Erfindung ist somit die Verwendung wässriger Dispersionen enthaltend eine Mischung aus
A) einer wässrigen Polyurethan- bzw. Polyurethan-Harnstoff-Dispersion enthaltend,
   I. ein Polymer A) aufgebaut aus
      I(i). mindestens einem difunktionellen aliphatischen Polyesterpolyol mit einem Molekulargewicht von 400 bis 5000 g/mol,
      I(ii). mindestens einer Mischung aus Hexamethylendiisocyanat (HDI) und 1-Isocyanato-3,3,5-trimethyl-5-isocyanatomethyl-cyclohexan (IPDI) und
      I(iii). mindestens einem Gemisch aus zwei oder mehreren aminischen Kettenverlängeren, wobei zumindest eine Verbindung eine ionische Gruppe trägt,
      und das Polymer A) nach der Trocknung teilkristallin oder kristallin ist mit einem Glasübergang bei einer Glastemperatur Tg zwischen -65 °C und -40 °C und
B) einer von A) verschiedenen wässrigen Polyurethan- bzw. Polyurethan-Harnstoff-Dispersion enthaltend,
   II. ein Polymer B) aufgebaut aus
      II(i). mindestens einem difunktionellen aromatischen Polyesterpolyol mit einem Molekulargewicht von 400 bis 5000 g/mol,
      II(ii). mindestens einer difunktionellen Polyolkomponente mit einem Molekulargewicht von 62 bis 399,
      II(iii). mindestens einem aliphatischen Diisocyanat und
      II(iv). mindestens einem aminischen Kettenverlängerer mit einer ionischen Gruppe, wobei das Polymer B) nach der Trocknung amorph ist mit einem Glasübergang bei einer Glastemperatur Tg zwischen -15 °C und +10 °C;
und wobei die Mischung 34,8 bis 90,2 Gew.-% Polymer A) und 9,8 bis 65,2 Gew.-% Polymer B) enthält,
für die Verklebung von Schaumsubstraten nach dem Sprühkoagulationsverfahren.

Die im Zusammenhang mit der vorliegenden Erfindung als Polyurethan-Dispersionen bezeichneten Dispersionen enthalten als disperse Phase Polymere, die Polyurethane im engeren Sinn sein können, also solche Polymere, die durch Polymerisation von Polyolen und Polyisocyanaten erhalten werden, aber es können auch solche sein, bei denen als Aufbau-Komponenten auch Mono- und/oder Diamine eingesetzt werden, gegebenenfalls als Kettenverlängerer. Somit werden die erfindungsgemäß einsetzbaren Dispersionen als wässrige Polyurethan- bzw. Polyurethan-Harnstoff-Dispersionen bezeichnet.

Beim Sprühkoagulationsverfahren werden die wässrigen Klebstoffdispersionen sowie ein Koagulationsmittel separat in eine 2K-Sprühpistole gefördert und im Sprühstrahl vermischt. Üblicherweise wird mit Zerstäuberluft mit 0,1 - 5 bar Druck versprüht; es kann aber auch mindestens eine der beiden Komponenten Airless gefördert werden, wie es z.B. in der WO 2015/137808 beschrieben wurde. Die Koagulation der Dispersion findet im Sprühstrahl auf dem Weg zur Oberfläche des ersten Substrats statt; dabei verdunstet bereits ein Teil des in der Klebstoffdispersion enthaltenen Wassers. Das Klebstoffpolymer bildet auf der Oberfläche des ersten Substrats bei Auftreffen einen Film der in noch nassem Zustand sofort klebrig ist. Da die Vermischung von Klebstoffdispersion und Koagulationsmittel erst im Sprühstrahl stattfindet, ist keine Topfzeit zu beachten. Aufgrund der Klebrigkeit des Polymerfilms in nassem Zustand kann die zweite Oberfläche sofort gefügt werden, idealerweise zum Beispiel unter Druck auf die Substrate gegen die Klebfläche. Die Anwendung von Druck durch Zusammenpressen der beiden Substratoberflächen ist von Vorteil, da sie die Festigkeit der Klebung erhöht. Ebenso ist es von Vorteil, wenn zumindest eines der beiden Substrate porös bzw. durchlässig gegenüber Wasser ist, um den Abtransport des Wasser aus der sich verfestigenden Klebstofffuge zu ermöglichen.

Als Koagulationsmittel kommen wässrige Lösungen von Salzen, bevorzugt von Metallen der ersten, zweiten und dritten Hauptgruppe des Periodensystems, in Frage, insbesondere, wenn sie eine gute Wasserlöslichkeit aufweisen. Bevorzugt werden Salze auf Basis zwei- oder dreiwertiger Kationen eingesetzt. Besonders bevorzugt werden Calciumchlorid, Zinksulfat oder Aluminiumsulfat eingesetzt. Ganz besonders bevorzugt wird Calciumchlorid eingesetzt. Es können auch Mischungen verschiedener Salze gemäß obiger Beschreibung als wässrige Lösung eingesetzt werden.

Die Konzentration der Salze in den als Koagulationsmittel geeigneten wässrigen Salzlösungen beträgt 1 bis 20 % Gew.-%, bevorzugt 2 bis 10 Gew.-%, und besonders bevorzugt 3 bis 4 Gew.-%. Der Anteil der wässrigen Lösung des Koagulationsmittels bezogen auf die Summe Klebstofflösung plus Koagulationsmittellösung beträgt zwischen 0,1 und 50 Gew.-%, bevorzugt zwischen 1 und 30 Gew.-%, besonders bevorzugt zwischen 8 und 20 Gew.-% und ganz besonders bevorzugt zwischen 12 und 18 Gew.-%.

Alternativ können als Koagulationsmittel auch wässrige Lösungen von anorganischen oder organischen Säuren, bevorzugt Zitronensäure, Phosphorsäure oder Kohlensäure, sowie Mischungen einer oder mehrerer o.g. Salze mit einer oder mehrerer dieser Säuren eingesetzt werden.

Die erfindungsgemäß eingesetzten Dispersionen enthalten jeweils in der Regel 30 bis 55 Gew.-% Feststoff, bevorzugt 38 bis 52 Gew.-%. Bezogen auf die in den Dispersionen als disperse Phase enthaltenen Polymere A) und B) enthalten die erfindungsgemäßen Mischungen 34,8 bis 90,2 Gew.-% Polymer A) und 9,8 bis 65,2 Gew.-% Polymer B), bevorzugt 44,4 bis 87,8 Gew.-% Polymer A) und 12,2 bis 55,6 Gew.-% Polymer B), besonders bevorzugt 54,5 bis 81,9 Gew.-% Polymer A) und 18,1 bis 45,5 Gew.-% Polymer B), und ganz besonders bevorzugt 65,1 bis 81,9 Gew.-% Polymer A) und 18,1 bis 34,9 Gew.-% Polymer B), bezogen auf das Gesamtgewicht der polymeren Feststoffe A) und B).

Als geeignete difunktionelle aliphatische Polyesterpolyole A) I(i). kommen insbesondere lineare Polyesterdiole in Betracht, wie sie in bekannter Weise aus aliphatischen oder cycloaliphatischen Dicarbonsäuren, wie z.B. Bernstein-, Methylbernstein-, Glutar-, Adipin-, Pimelin-, Kork-, Azelain-, Sebacin-, Nonandicarbon-, Decandicarbon-, Tetrahydrophthal-, Hexahydrophthal-, Cyclohexandicarbon-, Malein-, Fumar-, Malon- oder deren Gemische mit mehrwertigen Alkoholen, wie z.B. Ethandiol, Di-, Tri-, Tetraethylenglykol, 1,2-Propandiol, Di-, Tri-, Tetrapropylenglykol, 1,3-Propandiol, 1,4-Butandiol, 1,3-Butandiol, 2,3-Butandiol, 1,5-Pentandiol, 1,6-Hexandiol, 2,2-Dimethyl-1,3-propandiol, 1,4-Dihydroxycyclohexan, 1,4-Dimethylolcyclohexan, 1,8-Octandiol, 1,10-Decandiol, 1,12-Dodecandiol oder deren Gemische hergestellt werden können. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Bevorzugt sind difunktionelle aliphatische Polyesterpolyole A) I(i). auf Basis Bernsteinsäure, Methylbernsteinsäure, Glutarsäure, Adipinsäure oder Maleinsäure und 1,3-Propandiol, 1,4-Butandiol oder 1,6-Hexandiol.

Besonders bevorzugt sind difunktionelle aliphatische Polyesterpolyole A) I(i). auf Basis Adipinsäure und 1,4-Butandiol oder 1,6-Hexandiol.

Ganz besonders bevorzugt sind difunktionelle aliphatische Polyesterpolyole A) I(i). auf Basis Adipinsäure und 1,4-Butandiol.

Das Molekulargewicht des difunktionellen aliphatischen Polyesterpolyols A) I(i). liegt zwischen 400 und 5000 g/mol, bevorzugt zwischen 1500 und 3000 g/mol, besonders bevorzugt zwischen 1900 und 2500 g/mol, ganz besonders bevorzugt zwischen 2100 und 2300 g/mol.

Als Isocyanatkomponente A) I(ii). wird eine Mischung aus Hexamethylendiisocyanat (HDI) und 1-Isocyanato-3,3,5-trimethyl-5-isocyanatomethyl-cyclohexan (IPDI) eingesetzt. Das Molverhältnis HDI : IPDI liegt bevorzugt zwischen 9:1 und 1:9, besonders bevorzugt zwischen 3:1 und 1:3, ganz besonders bevorzugt beträgt es 2:1.

Die Komponente A) I(iii). besteht aus einem Gemisch aus zwei oder mehr aminischen Kettenverlängeren, wobei zumindest eine Verbindung eine ionische Gruppe trägt. Unter Kettenverlängerer im Sinne der Erfindung sind auch Monoamine gemeint, die zum Kettenabbruch führen.

Beispiele für Monoamine sind aliphatische und/oder alicyclische primäre und/oder sekundäre Monoamine wie Ethylamin, Diethylamin, die isomeren Propyl- und Butylamine, höhere linear-aliphatische Monoamine und cycloaliphatische Monoamine wie Cyclohexylamin. Weitere Beispiele sind Aminoalkohole, d. h. Verbindungen, die in einem Molekül Amino- und Hydroxylgruppen enthalten, wie z. B. Ethanolamin, N-Methylethanolamin, Diethanolamin oder 2-Propanolamin. Weitere Beispiele sind Monoaminoverbindungen, die zusätzlich Sulfonsäure- und/oder Carboxylgruppen tragen, wie beispielsweise Taurin, Glycin oder Alanin.

Beispiele für Diaminoverbindungen sind 1,2-Ethandiamin, 1,6-Hexamethylendiamin, 1-Amino-3,3,5-trimethyl-5-aminomethyl-cyclohexan (Isophorondiamin), Piperazin 1,4-Diaminocyclohexan oder Bis-(4-aminocyclohexyl)-methan. Weiterhin kommen Adipinsaeuredihydrazid, Hydrazin bzw. Hydrazinhydrat in Frage. Auch Polyamine wie Diethylentriamin können anstelle einer Diaminoverbindung als Aufbaukomponente eingesetzt werden.

Weitere Beispiele sind Aminoalkohole, d.h. Verbindungen, die in einem Molekül Amino- und Hydroxylgruppen enthalten, wie z. B. 1,3-Diamino-2-propanol, N-(2-Hydroxyethyl)-ethylendiamin oder N,N-Bis(2-Hydroxyethyl)-ethylendiamin.

Beispiele für Diaminoverbindungen mit einer ionischen Gruppe, die also zusätzlich Sulfonat- und/oder Carboxylatgruppen tragen, sind beispielsweise die Natrium- oder Kaliumsalze der N-(2-Aminoethyl)-2-aminoethansulfonsäure/ -carbonsäure, der N-(3-Aminopropyl)-2-aminoethansulfonsäure/ -carbonsäure, der N-(3-Aminoproyl)-3-aminopropansulfonsäure/ -carbonsäure oder der N-(2-Aminoethyl)-3-aminopropansulfonsäure/ -carbonsäure. Bevorzugt ist das Natriumsalz der N-(2-Aminoethyl)-2-aminoethansulfonsäure.

Bevorzugte Bestandteile des Gemischs A) I(iii). sind Diethanolamin, 1,2-Ethandiamin, 1-Amino-3,3,5-trimethyl-5-aminomethyl-cyclohexan (Isophorondiamin), Piperazin, N-(2-Hydroxyethyl)-ethylendiamin und die Natriumsalze der N-(2-Aminoethyl)-2-aminoethansulfonsäure/-carbonsäure.

Besonders bevorzugt ist ein Gemisch aus Diethanolamin und dem Natriumsalz der N-(2-Aminoethyl)-2-aminoethansulfonsäure.

Das Polymer A) ist nach der Trocknung teilkristallin oder kristallin mit einem Glasübergang bei einer Glastemperatur Tg zwischen -65 °C und -40 °C, bevorzugt mit einer Tg zwischen -60 °C und -45 °C, besonders bevorzugt zwischen -55 °C und -50 °C.

Als teilkristallin oder kristallin wird das Polymer A) bezeichnet, wenn es in der DSC-Messung nach DIN 65467 bei einer Aufheizrate von 20K/min einen Schmelzpeak aufweist, der einer Schmelzenthalpie > 5 J/g, bevorzugt > 10 J/g, besonders bevorzugt > 20 J/g und ganz besonders bevorzugt > 40 J/g entspricht. Der Schmelzpeak wird durch das Aufschmelzen regelmäßiger Teilstrukturen im Polymer verursacht. Die Schmelztemperatur liegt dabei bevorzugt in einem Bereich zwischen 30 °C und 80 °C, besonders bevorzugt zwischen 40 °C und 70 °C, ganz besonders bevorzugt zwischen 42 °C und 55 °C. Ausgewertet wird die erste Aufheizung, um auch langsam kristallisierende Polymere zu erfassen.

Als amorph wird das Polymer B) bezeichnet, wenn es bei der ersten Aufheizung keinen Schmelzpeak aufweist oder lediglich einen Schmelzpeak mit einer Schmelzenthalpie < 5 J/g, bevorzugt < 3 J/g, besonders bevorzugt < 1 J/g.

In einer bevorzugten Ausführung der Erfindung weist das amorphe Polymer B) keinen Schmelzpeak auf.

Als geeignete difunktionelle aromatische Polyesterpolyole B) II(i). kommen insbesondere lineare Polyesterdiole in Betracht, wie sie in bekannter Weise aus aromatischen Dicarbonsäuren, wie z.B. Terephthal-, Isophthal- oder o-Phthalsäure sowie deren Säureanhydride, wie z.B. o-Phthalsäureanhydrid, mit mehrwertigen Alkoholen, wie z.B. Ethandiol, Di-, Tri-, Tetraethylenglykol, 1,2-Propandiol, Di-, Tri-, Tetrapropylenglykol, 1,3-Propandiol, 1,4-Butandiol, 1,3-Butandiol, 2,3-Butandiol, 1,5-Pentandiol, 1,6-Hexandiol, 2,2-Dimethyl-1,3-propandiol, 1,4-Dihydroxycyclohexan, 1,4-Dimethylolcyclohexan, 1,8-Octandiol, 1,10-Decandiol, 1,12-Dodecandiol oder deren Gemische hergestellt werden können.

Bevorzugt sind difunktionelle aromatische Polyesterpolyole B) II(i). auf Basis o-Phthalsäure, o-Phthalsäureanhydrid und 1,4-Butandiol oder 1,6-Hexandiol.

Besonders bevorzugt sind difunktionelle aromatische Polyesterpolyole B) II(i). auf der Basis von o-Phthalsäure oder o-Phthalsäureanhydrid und 1,6-Hexandiol.

Das Molekulargewicht des difunktionellen aromatischen Polyesterpolyols B) II(i). liegt zwischen 400 und 5000 g/mol, bevorzugt zwischen 1500 und 3000 g/mol, besonders bevorzugt zwischen 1800 und 2300 g/mol, ganz besonders bevorzugt zwischen 1900 und 2100 g/mol.

Als Aufbaukomponente B) II(ii). geeignete difunktionelle Polyolkomponenten mit einem Molekulargewicht von 62 bis 399 und sind beispielsweise die unter A) I(i). und B) II(i). aufgeführten Produkte, soweit sie ein Molekulargewicht von 62 bis 399 Dalton aufweisen. Weitere geeignete Komponenten sind die zur Herstellung der Polyesterpolyole genannten mehrwertigen, insbesondere zweiwertigen Alkohole sowie weiterhin niedermolekulare Polyesterdiole wie z.B. Adipinsäure-bis-(hydroxyethyl)-ester. Auch kurzkettige difunktionelle Polyetherpolyole, wie z.B. die Homo-, Misch- und Propfpolymerisate des Ethylenoxid oder des Propylenoxid, kommen in Frage.

Bevorzugte Aufbaukomponenten B) II(ii). sind 1,4-Butandiol und 1,6-Hexandiol, besonders bevorzugt ist 1,6-Hexandiol.

Als Aufbaukomponenten B) II(iii). sind beliebige aliphatische Verbindungen geeignet, die mindestens zwei freie Isocyanatgruppen pro Molekül aufweisen. Bevorzugt werden Diisocyanate Y(NCO)₂ eingesetzt, wobei Y für einen zweiwertigen aliphatischen Kohlenwasserstoffrest mit 4 bis 12 Kohlenstoffatomen oder einen zweiwertigen cycloaliphatischen Kohlenwasserstoffrest mit 6 bis 15 Kohlenstoff-Atomen steht. Beispiele derartiger bevorzugt einzusetzender Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexyl-methan oder 4,4'-Diisocyanato-dicyclohexylpropan-(2,2) oder Gemische davon.

Besonders bevorzugt sind Hexamethylendiisocyanat (HDI), 1-Isocyanato-3,3,5-trimethyl-5-isocyanatomethyl-cyclohexan (IPDI) sowie 4,4'-Diisocyanato-dicyclohexyl-methan und Gemische davon. Bevorzugt werden die Isocyanate jedoch allein eingesetzt.

Ganz besonders bevorzugt ist Hexamethylendiisocyanat (HDI).

Aminische Kettenverlängerer B) II(vi). mit einer ionischen Gruppe sind bevorzugt Diaminoverbindungen, die zusätzlich Sulfonat- und/oder Carboxylatgruppen tragen, wie beispielsweise die Natrium- oder Kaliumsalze der N-(2-Aminoethyl)-2-aminoethansulfonsäure, der N-(3-Aminopropyl)-2-aminoethansulfonsäure, der N-(3-Aminoproyl)-3-aminopropansulfonsäure, der N-(2-Aminoethyl)-3-aminopropansulfonsäure oder der analogen Carbonsäuren.

Besonders bevorzugt sind die Natriumsalze der N-(2-Aminoethyl)-2-aminoethansulfonsäure und der analogen Carbonsäure, ganz besonders bevorzugt ist das Natriumsalz der N-(2-Aminoethyl)-2-aminoethansulfonsäure.

Die aminischen Kettenverlängerer B) II(iv). mit einer ionischen Gruppe können alleine oder zusammen mit anderen aminischen Kettenverlängerern, wie sie beispielsweise unter A) I(iii). beschrieben wurden, eingesetzt werden. Bevorzugt werden sie alleine eingesetzt.

Das Polymer B) ist nach der Trocknung amorph mit einem Glasübergang bei einer Glastemperatur Tg zwischen -15°C und +10°, bevorzugt mit einer Tg zwischen -10°C und +5°C, besonders bevorzugt zwischen -5°C und 0°C.

Die wässrigen Polyurethan- bzw. Polyurethan-Harnstoff-Dispersionen enthaltend die Polymere A) oder B) haben einen Festkörpergehalt von 10 bis 70 Gew.-%, bevorzugt von 25 bis 60 Gew.-% und besonders bevorzugt von 35 bis 55 Gew.-%.

Die wässrigen Polyurethan- bzw. Polyurethan-Harnstoff-Dispersionen enthaltend die Polymere A) oder B) werden bevorzugt nach dem Acetonverfahren hergestellt. Dazu werden Prepolymere aus den Komponenten A) I(i). und A) I(ii). bzw. B) II(i)., B)II(ii). und B II(iii). hergestellt, in Aceton gelöst und mit den Komponenten A) I(iii). bzw. B) II(iv). kettenverlängert. Nach der Dispergierung mit Wasser wird das Aceton abdestilliert. Die Anwendung und Durchführung des Acetonverfahrens ist Stand der Technik und dem Fachmann bekannt.

Bevorzugt enthalten die wässrigen Polyurethan- bzw. Polyurethan-Harnstoff-Dispersionen enthaltend die Polymere A) oder B) sowie die erfindungsgemäßen Mischungen keine externen Emulgatoren.

Die Herstellung der erfindungsgemäßen Dispersionen erfolgt bevorzugt durch Mischen der wässrigen Polyurethan- bzw. Polyurethan- bzw. Polyurethan-Harnstoff-Dispersionen der Polymere A) bzw. B).

Die mit den erfindungsgemäßen Dispersionen nach dem Sprühkoagulationsverfahren hergestellten Verklebungen zeigen ausreichende Sofortfestigkeiten bis hin zum sofortigen Materialausriss mit einer offenen Zeit von mindestens 3 Minuten. Insbesondere beim Verkleben von Schaum auf Schaum oder Schaum auf andere Substratoberflächen wie z.B. Holz, Metall oder Kunststoff, die eine dreidimensionale Struktur aufweisen und somit nicht flach sind, sind die nach dem erfindungsgemäßen Verfahren hergestellten Verklebungen in der Lage, die Rückstellkräfte des Schaums ohne Wartezeit, insbesondere ohne vollständiges Entfernen des Wassers, aufzunehmen. Beispielhaft für eine solche Anwendung ist das Verkleben quaderförmiger Schaumstoffblöcke zu Kissen, indem die schmalen Seitenflächen eingeknickt und nach dem Sprühauftrag der erfindungsgemäßen Klebstoffdispersion sofort nass aufeinandergedrückt werden. Dank der hohen Sofort-Nassfestigkeit kann der angelegte Pressdruck sofort wieder weggelassen werden, ohne dass ein Zurückfedern oder Verschieben des gespannten Schaumstoffs auftritt.

Insbesondere werden mit den erfindungsgemäßen Dispersionen Klebstoffzusammensetzungen hergestellt, die sich zur Herstellung von Klebstoffverbünden eignen, wobei der Klebstoffverbund ein Substrat, die erfindungsgemäße Dispersion und ein weiteres Substrat enthält. Die beiden Substrate können dabei aus den gleichen oder unterschiedlichen Materialien bestehen. Die Substrate können definitionsgemäß auch Flächengebilde darstellen. Bevorzugt handelt es sich bei mindestens einem Substrat um ein Schaumsubstrat.

Unter einem Schaumsubstrat versteht man ein Substrat aus Schaumstoff, wobei Schaumstoffe im allgemeinen künstlich hergestellte Stoffe mit zelliger Struktur und niedriger Dichte sind. Dabei kann man zwischen offenzelligen, geschlossenzelligen sowie gemischtzelligen Schaumstoffen unterscheiden. Je nach Härtegrad teilt man die Schaumstoffe in Hart- und Weichschäume ein. Zum Schäumen eignen sich fast alle Kunststoffe.

Prinzipiell eignen sich die erfindungsgemäßen Dispersionen zur Verklebung aller Schaumsubstrate nach dem Sprühkoagulationsverfahren. Bevorzugt werden offenzellige und gemischtzellige Schaumsubstrate verklebt.

In einer bevorzugten Ausführung der Erfindung bestehen das oder die Schaumsubstrate aus Polyurethan (zum Beispiel Polyether- und Polyester-Schäume) und/oder einem Kautschuk wie beispielsweise Naturkautschuk (NR), Styrol-Butadien-Kautschuk (SBR), Ethylen-Propylen-Dien-Polymer (EPDM), Butadien-Acrylnitril-Kautschuk (NBR) oder Chloropren-Kautschuk (CR).

In einer besonders bevorzugten Ausführung der Erfindung bestehen das oder die Schaumsubstrate aus Polyurethan.

Die erfindungsgemäßen Dispersionen zeichnen sich außerdem durch eine gute Haftung zu unterschiedlichsten anderen Substraten aus, wie zum Beispiel zu Holz, Papier, Leder, Textilien, Kork, und Kunststoffen (Thermoplaste, Elastomere, Duromere, Komposite) wie unterschiedlichen Polyvinylchloridqualitäten, Polyurethanen, Polyvinylacetat, ABS, Kautschuken, Polyethylvinylacetat, Polycarbonat oder Polyolefinen, wie z.B. gefülltes oder ungefülltes Polypropylen. In seltenen Fällen ist eine Vorbehandlung der Substratoberfläche notwendig, beispielsweise durch Primern, Flämmen oder Coronabehandlung, insbesondere bei unpolaren Substraten.

Die Klebstoffzusammensetzungen, enthaltend die erfindungsgemäßen Dispersionen eignen somit sich zum Verkleben beliebiger Substrate, bevorzugt aus den oben genannten Materialen. Besonders eignen sich die erfindungsgemäßen Klebstoffe zum Kleben von Schaum auf Schaum, Schaum auf Holz, Schaum auf diversen Kunststoffen, sowie Textilien auf diversen Substraten.

Ein Klebstoffverbund, umfassend mit den erfindungsgemäß verwendeten Dispersionen verklebte Substrate und Flächengebilde ist ebenso Gegenstand der vorliegenden Anmeldung wie klebstoffverbundene Schaumsubstrate, die durch die erfindungsgemäß Verwendung erhalten werden.

### Beispiele

Nachstehend wird die Erfindung anhand der Beispiele näher erläutert. Folgende Methoden und Prüfmethoden kamen dabei zum Einsatz:

### A) Sprühkoagulationsverfahren:

Es wird mit einer Standard-Spritzpistole für Zweikomponenten-Dispersionsklebstoffe, nämlich der PILOT III 2K von der Firma Walther Pilot appliziert. Dabei werden der Klebstoff, sowie das Koagulationsmittel CaCl₂ (3 Gew.-%ige Lösung in Wasser) separat in die Sprühpistole gefördert, im Sprühstrahl vermischt und der Klebstoff koaguliert. Da die Vermischung erst im Sprühstrahl stattfindet, ist keine Topfzeit zu beachten. Es wurde das Verhältnis 86 Gew.-% Klebstoffdispersion und 14 Gew.-% CaCl₂-Lösung gewählt.

Die genauen Einstellungen der Spritzpistole sind dem Fachmann prinzipiell bekannt und können ohne ungebührlich hohen Aufwand auf den speziellen Fall zugeschnitten und durch einfache Vorversuche ermittelt werden. Die Mengenverhältnisse und das Auftragsgewicht können durch Rückwiegen der Vorlagebehälter sowie der Substrate ermittelt werden.

Folgende Einstellungen kamen zum Einsatz:
a.) Klebstoffkomponente: Förderdruck 1,3 bar
b.) Koagulationskomponente: Förderdruck 0,3 bar
c.) Zerstäuberluftdruck: 2,8bar
d.) Bohrung (Düse) f. Komponente Klebstoff: 1,0mm
e.) Bohrung (Düse) f. Komponente Koagulationsmittel: 0,4mm
f.) Auftragsgewichte: 130 - 150 g/m² (nass)

### B) Bestimmung der Anfangsfestigkeit:

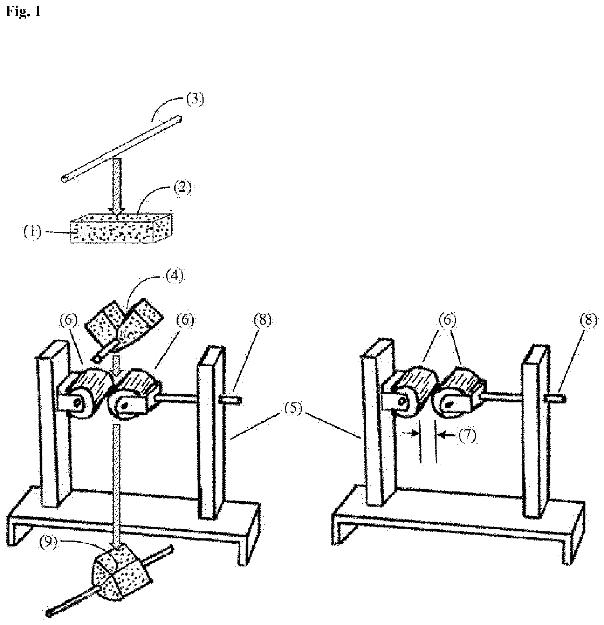

Als Prüfmaterial werden (siehe Fig. 1) PU-Schaumstoffprobekörper ST 5540 (1) der Fa. STN Schaumstoff-Technik-Nürnberg GmbH mit den Abmessungen 10 x 5 x 3 cm und einem Raumgewicht von 40 kg/m³ verwendet. Zur Beurteilung der Anfangsfestigkeit werden die Probekörper unmittelbar nach dem Klebstoff-Auftrag auf die Oberseite (2) der Schaumstoffkörper (1) mittels Sprühkoagulationsverfahrens (Aufwandmenge 130 - 150 g/m² nass) mit einem Holzstab (3) (Rundholz D = 7 mm oder Vierkant 7 x 7 mm)) in der Mitte geknickt (4) und mittels der Prüfvorrichtung (5) durch 2 Stahlrollen (6) (Durchmesser 40 mm, Länge 64 mm) geführt, deren tangentialer Abstand (7) zuvor mit einer Gewindespindel (8) auf 10 mm eingestellt wurde. Die Anfangsfestigkeit ist ausreichend, wenn der Probekörper bzw. die Klebnaht (9) sich trotz der im Probekörper vorhandenen Rückstellkräfte nicht öffnet.

### C) Bestimmung der offenen Zeit

Als Prüfmaterial werden Polyether-Schaumstoffkörper Recticel T 20120 der Fa. Recticel mit den Abmessungen 10 x 5 x 3 cm und einem Raumgewicht von 20 kg/m³ verwendet. Zur Beurteilung der offenen Zeit werden die Probekörper sofort, alle 60 Sekunden oder nach Bedarf in zu definierenden Zeitabständen nach dem Klebstoff-Auftrag mittels Sprühkoagulationsverfahrens (Aufwandmenge 130 - 150 g/m² nass) mit in der Mitte geknickt und leichtem Handflächendruck zusammengefügt. Das Ende der offenen Zeit wird dadurch angezeigt, dass die Festigkeit nicht mehr ausreicht und sich der Probekörper in Folge der auftretenden Rückstellkräfte öffnet.

### D) Ermittlung der Härte der Klebenaht:

Die Klebenaht der unter B) hergestellten Prüfkörper wurde nach 24 h Lagerung bei Raumtemperatur im direkten Vergleich zu Referenzproben sensorisch mittels Fühlen beurteilt. Die Referenzproben wurden mit kommerziell erhältlichen Polychoropren-Latices (Covestro Deutschland AG) unterschiedlicher Shore A-Härte hergestellt. Die Klebenaht des Probekörpers aus Dispercoll® C 84 (Shore A Härte des reinen, getrockneten Polymers = 88) wurde als Referenz für eine harte Klebenaht genommen, die Klebenaht des Probekörpers aus Dispercoll® C 74 (Shore A Härte des reinen, getrockneten Polymers = 55) wurde als Referenz für eine mittelharte Klebenaht genommen und die Klebenaht des Probekörpers aus Dispercoll® C 2372 (Shore A Härte des reinen, getrockneten Polymers = 40) wurde als Referenz für eine weiche Klebenaht genommen.

### E) Ermittlung der Glastemperaturen, Schmelztemperaturen und Schmelzenthalpien mittels DSC:

Die Glastemperaturen sowie Schmelztemperaturen und Schmelzenthalpien wurden mittels Differential Scanning Calorimetry (DSC) mit einem Kalorimeter Pyris Diamond DSC der Firma Perkin-Elmer bestimmt. Dazu wurde ein Film durch Rakeln der Dispersion mit 100 µm Nassfilmdicke auf einer Glasplatte hergestellt, 2 Stunden lang abgelüftet, und anschließend wird dieser Film mitsamt der Glasplatte 3 Tage bei Raumtemperatur und 0% rel. Raumfeuchte in einer Trockenbox getrocknet. Anschließend wurde mit 10 mg Probenmaterial aus diesem Film die DSC-Kurve mit folgenden Messbedingungen aufgenommen: Schnelle Abkühlung auf die Starttemperatur -100 °C, danach Beginn von drei Aufheizungen von -100 °C bis +150 °C mit einer Heizrate von 20 K/min und einer Kühlrate von 320 K/min unter Helium-Atmosphäre und Kühlung mit flüssigem Stickstoff. Die Glastemperatur entspricht der Temperatur bei halber Höhe des Glasübergangs, wobei die dritte Aufheizung ausgewertet wurde. Für die Bestimmung der Schmelztemperaturen und Schmelzenthalpien wurde die erste Aufheizung ausgewertet.

### F) Einsatzstoffe:

- Polyester I:: Polyesterdiol aus 1,4-Butandiol und Adipinsäure der OH-Z = 50
- Polyester II:: Polyesterdiol aus 1,6-Hexandiol und Phthalsäureanhydrid der OH-Z = 56
- Desmodur® H:: Hexamethylendiisocyanat-1,6 (Covestro Deutschland AG, Leverkusen/D)
- Desmodur® I:: Isophorondiisocyanat (Covestro Deutschland AG, Leverkusen/D)

### Beispiel 1 (erfindungsgemäß):

### Herstellung einer wässrigen Polyurethan- bzw. Polyurethan-Harnstoff-Dispersion enthaltend Polymer A):

450 g Polyester I werden 1 Stunde bei 110°C und 15 mbar entwässert. Bei 80°C werden 30,11 g Desmodur® H und anschließend 20,14 g Desmodur® I zugegeben. Die Mischung wird bei 80 bis 90°C gerührt, bis ein konstanter Isocyanatgehalt von 1,15 % erreicht ist. Das Reaktionsgemisch wird in 750 g Aceton gelöst und dabei auf 48°C abgekühlt. In die homogene Lösung wird eine Lösung aus 5,95 g Natriumsalz der N-(2-Aminoethyl)-2-aminoethansulfonsäure und 2,57 g Diethanolamin in 65 g Wasser unter kräftigem Rühren gegeben. Nach 30 Minuten wird durch Zugabe von 700 g Wasser dispergiert. Nach destillativer Abtrennung des Acetons wird eine wässrige Polyurethan-Polyharnstoff-Dispersion mit einen Feststoffgehalt von 40,0 Gew.-% erhalten.

Das enthaltene Polymer ist nach der Trocknung teilkristallin mit einem Glasübergang bei einer Glastemperatur Tg von -54°C, einer Schmelztemperatur von 48°C und einer Schmelzenthalpie von 50,4 J/g.

### Beispiel 2 (erfindungsgemäß):

### Herstellung einer wässrigen Polyurethan- bzw. Polyurethan-Harnstoff-Dispersion enthaltend Polymer B):

1215 g Polyester II werden 1 Stunde bei 110°C und 15 mbar entwässert. Bei 80°C werden 4,6 g 1,6-Hexandiol und 179,0 g Desmodur® H zugegeben und die Mischung wird 90°C gerührt, bis ein konstanter Isocyanatgehalt von 2,28 % erreicht ist. Das Reaktionsgemisch wird in 2490 g Aceton gelöst und dabei auf 48°C abgekühlt. In die homogene Lösung wird eine Lösung aus 31,9 g Natriumsalz der N-(2-Aminoethyl)-2-aminoethansulfonsäure in 300 g Wasser unter kräftigem Rühren gegeben. Nach 30 Minuten wird durch Zugabe von 1150 g Wasser dispergiert. Nach destillativer Abtrennung des Acetons wird eine wässrige Polyurethan-Polyharnstoff-Dispersion mit einen Feststoffgehalt von 50,0 Gew.-% erhalten.

Das enthaltene Polymer ist nach der Trocknung amorph (ohne Schmelzpeak im DSC) und mit einem Glasübergang bei einer Glastemperatur Tg von -1,5°C.

### Beispiel 3 (Vergleich):

Verwendung der Dispersion aus Beispiel 1 (enthaltend 100 % Polymer A). Wie der Tabelle zu entnehmen ist, ist die Anfangsfestigkeit zwar gut, jedoch wird eine zu harte Klebenaht erhalten, und die offene Zeit ist mit einer Minute nicht ausreichend.

### Beispiel 4 (Vergleich):

### Herstellung einer erfindungsgemäßen Mischung aus den Dispersionen der Beispiele 1 und 2 und Verwendung:

95 Gewichtsteile der Dispersion aus Beispiel 1 (teilkristallin) und 5 Gewichtsteile der Dispersion aus Beispiel 2 (amorph) werden unter Rühren gemischt und homogenisiert. Unter Berücksichtigung der Festkörpergehalte enthält die erfindungsgemäße Mischung 93,8 Gew.-% Polymer A und 6,2 Gew.-% Polymer B.

Wie der Tabelle zu entnehmen ist, ist die Anfangsfestigkeit zwar gut, jedoch wird eine zu harte Klebenaht erhalten und die offene Zeit ist mit einer Minute nicht ausreichend.

### Beispiel 5 (erfindungsgemäß):

### Herstellung einer erfindungsgemäßen Mischung aus den Dispersionen der Beispiele 1 und 2 und Verwendung:

92 Gewichtsteile der Dispersion aus Beispiel 1 (teilkristallin) und 8 Gewichtsteile der Dispersion aus Beispiel 2 (amorph) werden unter Rühren gemischt und homogenisiert. Unter Berücksichtigung der Festkörpergehalte enthält die erfindungsgemäße Mischung 90,2 Gew.-% Polymer A und 9,8 Gew.-% Polymer B.

Wie der Tabelle zu entnehmen ist, ist die Anfangsfestigkeit gut, die Klebenaht mittelhart und die offene Zeit erfüllt mit drei Minuten die Anforderungen.

### Beispiel 6 (erfindungsgemäß):

### Herstellung einer erfindungsgemäßen Mischung aus den Dispersionen der Beispiele 1 und 2 und Verwendung:

90 Gewichtsteile der Dispersion aus Beispiel 1 (teilkristallin) und 10 Gewichtsteile der Dispersion aus Beispiel 2 (amorph) werden unter Rühren gemischt und homogenisiert. Unter Berücksichtigung der Festkörpergehalte enthält die erfindungsgemäße Mischung 87,8 Gew.-% Polymer A und 12,2 Gew.-% Polymer B.

Wie der Tabelle zu entnehmen ist, ist die Anfangsfestigkeit gut, die Klebenaht mittelhart und die offene Zeit erfüllt mit vier Minuten die Anforderungen.

### Beispiel 7 (erfindungsgemäß):

### Herstellung einer erfindungsgemäßen Mischung aus den Dispersionen der Beispiele 1 und 2 und Verwendung:

85 Gewichtsteile der Dispersion aus Beispiel 1 (teilkristallin) und 15 Gewichtsteile der Dispersion aus Beispiel 2 (amorph) werden unter Rühren gemischt und homogenisiert. Unter Berücksichtigung der Festkörpergehalte enthält die erfindungsgemäße Mischung 81,9 Gew.-% Polymer A und 18,1 Gew.-% Polymer B.

Wie der Tabelle zu entnehmen ist, ist die Anfangsfestigkeit gut, die Klebenaht mittelhart und die offene Zeit erfüllt mit 7 Minuten die Anforderungen.

### Beispiel 8 (erfindungsgemäß):

### Herstellung einer erfindungsgemäßen Mischung aus den Dispersionen der Beispiele 1 und 2 und Verwendung:

80 Gewichtsteile der Dispersion aus Beispiel 1 (teilkristallin) und 20 Gewichtsteile der Dispersion aus Beispiel 2 (amorph) werden unter Rühren gemischt und homogenisiert. Unter Berücksichtigung der Festkörpergehalte enthält die erfindungsgemäße Mischung 76,2 Gew.-% Polymer A und 23,8 Gew.-% Polymer B.

Wie der Tabelle zu entnehmen ist, ist die Anfangsfestigkeit gut, die Klebenaht mittelhart und die offene Zeit erfüllt mit 7 Minuten die Anforderungen.

### Beispiele 9 (erfindungsgemäß):

### Herstellung einer erfindungsgemäßen Mischung aus den Dispersionen der Beispiele 1 und 2 und Verwendung:

75 Gewichtsteile der Dispersion aus Beispiel 1 (teilkristallin) und 25 Gewichtsteile der Dispersion aus Beispiel 2 (amorph) werden unter Rühren gemischt und homogenisiert. Unter Berücksichtigung der Festkörpergehalte enthält die erfindungsgemäße Mischung 70,6 Gew.-% Polymer A und 29,4 Gew.-% Polymer B.

Wie der Tabelle zu entnehmen ist, ist die Anfangsfestigkeit gut, die Klebenaht mittelhart und die offene Zeit erfüllt mit 7 Minuten die Anforderungen.

### Beispiele 10 (erfindungsgemäß):

### Herstellung einer erfindungsgemäßen Mischung aus den Dispersionen der Beispiele 1 und 2 und Verwendung:

70 Gewichtsteile der Dispersion aus Beispiel 1 (teilkristallin) und 30 Gewichtsteile der Dispersion aus Beispiel 2 (amorph) werden unter Rühren gemischt und homogenisiert. Unter Berücksichtigung der Festkörpergehalte enthält die erfindungsgemäße Mischung 65,1 Gew.-% Polymer A und 34,9 Gew.-% Polymer B.

Wie der Tabelle zu entnehmen ist, ist die Anfangsfestigkeit gut, die Klebenaht mittelhart und die offene Zeit erfüllt mit 7 Minuten die Anforderungen.

### Beispiel 11 (erfindungsgemäß):

### Herstellung einer erfindungsgemäßen Mischung aus den Dispersionen der Beispiele 1 und 2 und Verwendung:

60 Gewichtsteile der Dispersion aus Beispiel 1 (teilkristallin) und 40 Gewichtsteile der Dispersion aus Beispiel 2 (amorph) werden unter Rühren gemischt und homogenisiert. Unter Berücksichtigung der Festkörpergehalte enthält die erfindungsgemäße Mischung 54,5 Gew.-% Polymer A und 45,5 Gew.-% Polymer B.

Wie der Tabelle zu entnehmen ist, ist die Anfangsfestigkeit gut, die Klebenaht mittelhart und die offene Zeit erfüllt mit 7 Minuten die Anforderungen.

### Beispiel 12 (erfindungsgemäß):

### Herstellung einer erfindungsgemäßen Mischung aus den Dispersionen der Beispiele 1 und 2 und Verwendung:

50 Gewichtsteile der Dispersion aus Beispiel 1 (teilkristallin) und 50 Gewichtsteile der Dispersion aus Beispiel 2 (amorph) werden unter Rühren gemischt und homogenisiert. Unter Berücksichtigung der Festkörpergehalte enthält die erfindungsgemäße Mischung 44,4 Gew.-% Polymer A und 55,6 Gew.-% Polymer B.

Wie der Tabelle zu entnehmen ist, ist die Anfangsfestigkeit gut, die Klebenaht mittelhart und die offene Zeit erfüllt mit 4 Minuten die Anforderungen.

### Beispiel 13 (erfindungsgemäß):

### Herstellung einer erfindungsgemäßen Mischung aus den Dispersionen der Beispiele 1 und 2 und Verwendung:

40 Gewichtsteile der Dispersion aus Beispiel 1 (teilkristallin) und 60 Gewichtsteile der Dispersion aus Beispiel 2 (amorph) werden unter Rühren gemischt und homogenisiert. Unter Berücksichtigung der Festkörpergehalte enthält die erfindungsgemäße Mischung 34,8 Gew.-% Polymer A und 65,2 Gew.-% Polymer B.

Wie der Tabelle zu entnehmen ist, ist die Anfangsfestigkeit gut, die Klebenaht weich und die offene Zeit erfüllt mit 3 Minuten die Anforderungen.

### Beispiel 14 (Vergleich):

### Herstellung einer erfindungsgemäßen Mischung aus den Dispersionen der Beispiele 1 und 2 und Verwendung:

30 Gewichtsteile der Dispersion aus Beispiel 1 (teilkristallin) und 70 Gewichtsteile der Dispersion aus Beispiel 2 (amorph) werden unter Rühren gemischt und homogenisiert. Unter Berücksichtigung der Festkörpergehalte enthält die erfindungsgemäße Mischung 25,5 Gew.-% Polymer A und 74,5 Gew.-% Polymer B.

Wie der Tabelle zu entnehmen ist, ist keine Anfangsfestigkeit gegeben.

### Beispiel 15 (Vergleich):

### Verwendung der Dispersion aus Beispiel 2 (enthaltend 100 % Polymer B)

Wie der nachfolgenden Tabelle zu entnehmen ist, ist keine Anfangsfestigkeit gegeben.

**Tabelle: Ergebnisse der erfindungsgemäßen Versuche und der Vergleichsversuche**

| **Beispiel** | **Polymer A / B [Gew.-%]** | **Anfangsfestigkeit** | **Härte der Naht** | **Offene Zeit [Minuten]** |
|---|---|---|---|---|
| 3 (Vergleich) | 100 / 0 | ja | hart | 1 |
| 4 (Vergleich) | 93,8 / 6,2 | ja | hart | 1 |
| 5 (erfindungsgemäß) | 90,2 / 9,8 | ja | mittel | 3 |
| 6 (erfindungsgemäß) | 87,8 / 12,2 | ja | mittel | 4 |
| 7 (erfindungsgemäß) | 81,9 / 18,1 | ja | mittel | 7 |
| 8 (erfindungs gemäß) | 76,2 / 23,8 | ja | mittel | 7 |
| 9 (erfindungs gemäß) | 70,6 / 29,4 | ja | mittel | 7 |
| 10 (erfindungs gemäß) | 65,1 / 34,9 | ja | mittel | 7 |
| 11 (erfindungs gemäß) | 54,5 / 45,5 | ja | mittel | 6 |
| 12 (erfindungs gemäß) | 44,4 / 55,6 | ja | mittel | 4 |
| 13 (erfindungsgemäß) | 34,8 / 65,2 | ja | weich | 3 |
| 14 (Vergleich) | 25,5 / 74,5 | nein | nicht bestimmbar | 0 |
| 15 (Vergleich) | 0 / 100 | nein | nicht bestimmbar | 0 |

## Patentansprüche

1. Verwendung einer wässrigen Dispersion enthaltend eine Mischung aus
A) einer wässrigen Polyurethan- bzw. Polyurethan-Harnstoff-Dispersion enthaltend,
I. ein Polymer A) aufgebaut aus
I(i). mindestens einem difunktionellen aliphatischen Polyesterpolyol mit einem Molekulargewicht von 400 bis 5000 g/mol,
I(ii). mindestens einer Mischung aus Hexamethylendiisocyanat (HDI) und 1-Isocyanato-3,3,5-trimethyl-5-isocyanatomethyl-cyclohexan (IPDI) und
I(iii). mindestens einem Gemisch aus zwei oder mehreren aminischen Kettenverlängeren, wobei zumindest eine Verbindung eine ionische Gruppe trägt,
und das Polymer A) nach der Trocknung teilkristallin oder kristallin ist mit einem Glasübergang bei einer Glastemperatur Tg zwischen -65 °C und -40 °C und
B) einer von A) verschiedenen wässrigen Polyurethan- bzw. Polyurethan-Harnstoff-Dispersion enthaltend,
II. ein Polymer B) aufgebaut aus
II(i). mindestens einem difunktionellen aromatischen Polyesterpolyol mit einem Molekulargewicht von 400 bis 5000 g/mol,
II(ii). mindestens einer difunktionellen Polyolkomponente mit einem Molekulargewicht von 62 bis 399,
II(iii). mindestens einem aliphatischen Diisocyanat und
II(iv). mindestens einem aminischen Kettenverlängerer mit einer ionischen Gruppe,
wobei das Polymer B) nach der Trocknung amorph ist mit einem Glasübergang bei einer Glastemperatur Tg zwischen -15 °C und +10 °C;
und wobei die Mischung 34,8 bis 90,2 Gew.-% Polymer A) und 9,8 bis 65,2 Gew.-% Polymer B), bezogen auf die Summe der Polymeren A) und B), enthält,
für die Verklebung von Schaumsubstraten nach dem Sprühkoagulationsverfahren.

2. Verwendung einer wässrigen Dispersion gemäß Anspruch 1, **dadurch gekennzeichnet, dass** die Mischung 44,4 bis 87,8 Gew.-% Polymer A) und 12,2 bis 55,6 Gew.-% Polymer B) enthält.

3. Verwendung einer wässrigen Dispersion gemäß Anspruch 1, **dadurch gekennzeichnet, dass** die Mischung 54,5 bis 81,9 Gew.-% Polymer A) und 18,1 bis 45,5 Gew.-% Polymer B) enthält.

4. Verwendung einer wässrigen Dispersion gemäß Ansprüchen 1 bis 3, **dadurch gekennzeichnet, dass** das Molverhältnis HDI: IPDI zwischen 9:1 und 1:9 liegt.

5. Verwendung einer wässrigen Dispersion gemäß Ansprüchen 1 bis 3, **dadurch gekennzeichnet, dass** das Molverhältnis HDI: IPDI zwischen 3:1 und 1:3 liegt.

6. Verwendung einer wässrigen Dispersion gemäß Ansprüchen 1 bis 5, **dadurch gekennzeichnet, dass** Komponente A) I(iii). ein Gemisch aus Diethanolamin und dem Natriumsalz der N-(2-Aminoethyl)-2-aminoethansulfonsäure ist.

7. Verwendung einer wässrigen Dispersion gemäß Ansprüchen 1 bis 6, **dadurch gekennzeichnet, dass** Komponente B) II(i). ein Polyesterpolyol auf Basis von o-Phthalsäure, o-Phthalsäureanhydrid und 1,4-Butandiol oder 1,6-Hexandiol ist.

8. Verwendung der wässrigen Dispersionen gemäß Ansprüchen 1 bis 7 zur Herstellung von Klebstoffzusammensetzungen.

9. Verfahren zur Herstellung der wässrigen Dispersionen gemäß Ansprüchen 1 bis 7, **dadurch gekennzeichnet, dass** die wässrigen Polyurethan- bzw. Polyurethan-Harnstoff-Dispersion der Polymere A) bzw. B) miteinander gemischt werden.

10. Klebstoffverbundene Schaumsubstrate, erhalten durch die Verwendung gemäß Anspruch 1.
